# EUROPÄISCHE PATENTSCHRIFT

(11) **EP 0 969 277 B1**
(45) Veröffentlichungstag und Bekanntmachung des Hinweises auf die Patenterteilung: **06.02.2008**
(21) Anmeldenummer: 98914176.7
(22) Anmeldetag: 27.02.1998
(51) Int. Cl.: G01N 1/28

(54) **VORRICHTUNG ZUR BEHANDLUNG UND INFILTRATION VON HISTOLOGISCHEN PROBEN**
DEVICE FOR THE PROCESSING AND IMPREGNATION OF HISTOLOGICAL SAMPLES
DISPOSITIF DE TRAITEMENT ET D'IMPREGNATION D'ÉCHANTILLONS HISTOLOGIQUES

(30) Priorität: 17.03.1997 RU 97104413
(43) Veröffentlichungstag der Anmeldung: 05.01.2000
(73) Patentinhaber: Izvozchikov, Iliya Borisovich, St. Petersburg, 194223 (RU)
(72) Erfinder: IZVOZCHIKOV, Iliya Borisovich, St.Petersburg, 194223 (RU); McCORMICK, James, B., Chicago, IL 60625 (US); KHOKHLOV, Valery Abramovich, St.Petersburg, 194021 (RU)
(74) Vertreter: Weber, Walter
(86) Internationale Anmeldenummer: PCT/RU1998/000053
(87) Internationale Veröffentlichungsnummer: WO 1998/041837

(56) Entgegenhaltungen:
- EP-A- 0 418 026
- WO-A-86/00407
- DE-A- 4 200 446
- DE-A1- 3 042 578
- DE-A1- 4 200 446
- SU-A- 93 155
- SU-A- 1 777 033
- US-A- 4 089 989
- US-A- 4 358 470
- US-A- 4 576 796
- US-A- 5 480 803

## Beschreibung

Die vorliegende Erfindung bezieht sich auf eine Vorrichtung zur Behandlung und Infiltration von histologischen Proben, bestehend aus einem in einem Gehäuse eingebauten Drehmittel, das eine Drehachse mit darauf angebrachten Behältern für Kassetten zum Halten von histologischen Proben aufweist, einem Mittel zum Drehen der Drehachse mit veränderlicher Geschwindigkeit, Behandlungs- und Infiltrationsflüssigkeitstanks, die außerhalb des Gehäuses angeordnet sind, sowie Stutzen für die Zufuhr dieser Flüssigkeiten zum Gehäuse und für deren Entfernung aus dem Gehäuse.

Bei der Aufbereitung von histologischen Proben für mikroskopische Untersuchungen werden die zur Untersuchung entnommenen Proben einer Reihe von aufeinanderfolgenden Arbeitsschritten unterzogen: der Fixation, z.B. in einer wässerigen Formaldehydlösung, dem Dehydrieren, dem Aufhellen und dem Infiltrieren mit Paraffin oder einem anderen geeigneten Wachs. Bei der Dehydrierung werden die fixierten Proben mit einem Alkoholreagens allmählich steigender Konzentration behandelt. Bei der Aufhellung werden die dehydrierten Proben ein- oder mehrmals mit einem Aufhellungsmittel, z.B. Xylol behandelt. Für die Infiltration mit Paraffin (oder einem anderen Wachs) werden die dehydrierten und aufgehellten Proben ebenfalls mehrmals in geschmolzenes Paraffin oder ein anderes geschmolzenes Wachs getaucht. Erst danach ist die histologische Probe zur Bearbeitung mit dem Mikrotom geeignet.

Die Behandlung und Infiltration von histolgischen Proben kann, wie dies häufig auch geschieht, von Hand durchgeführt werden. Dabei taucht ein Laborant die Kassetten mit histologischen Proben in einen Behälter, fügt die erforderlichen Flüssigkeiten hinzu, schüttelt den Behälter, gießt die Flüssigkeiten ab, gibt die Behälter mit den Kassetten oder die Kassetten in eine Heiz- oder Kühlvorrichtung usw. Die manuelle Behandlung und Infiltration ist äußerst arbeitsintensiv, erfordert qualifizierte Fachkräfte, und es werden nicht immer reproduzierbare Ergebnisse erzielt. Labors, die sich auf histologische Forschungen spezialisiert haben, verwenden automatisierte Vorrichtungen zur Behandlung und Infiltration von histologischen Proben.

Die Vorrichtung zur Behandlung und Infiltration von histologischen Proben gemäß EP 0269316 stellt einen Mehrkammer-Apparat dar. Dieser weist zwölf zu einem Kreis angeordnete Kammern auf und ein Mittel zum Anheben des Behälters mit den die Proben enthaltenden Kassetten und Transportieren des Behälters von einer Kammer zur nächsten. Dieses Mittel befindet sich auf einer Achse, die mit einem innerhalb des Kammerkreises angeordneten Antrieb verbunden ist. Der Kammerkreis ist mit einer gemeinsamen Abdeckung bedeckt, die über jeder Kammer eine öffenbare Öffnung aufweist. Das Mittel zum Transport des Behälters befindet sich in einem Gehäuse. Die Vorrichtung ist prozessorgesteuert. Die Kassetten mit den Proben befinden sich in einem Behälter, der im Gehäuse am Schwenkhebel der Transportvorrichtung aufgehängt sind. In einem in den Prozessor eingegebenen Modus wird der Behälter mit den Proben von oben genannten Mittel in jede Kammer mit den jeweiligen Reagenzien getaucht, aus ihr herausgenommen und zur nächsten Kammer transportiert.

Die in der EP 0269316 offenbarte Vorrichtung ermöglicht es, das Behandeln und Infiltrieren von histologischen Proben zu automatisieren; da sie jedoch nicht hermetisch abgeschlossen ist, kann es zu einer Verunreinigung der Luft im Labor mit Schadstoffen, z.B. Xylol, kommen, und es ist ferner nicht möglich bei jedem Behandlungsschritt Vakuum anzulegen.

Die Vorrichtung zur Behandlung und Infiltration von histologischen Proben gemäß EP 0077477 umfaßt eine Kammer zur Behandlung von Proben, einige Tanks für Reagenzien, die mit der Kammer über ein separates Ventilsystem verbunden sind, eine Vakuumpumpe und ein umschaltbares Ventilsystem, das mit der Kammer verbunden ist und den Reganzienstrom in die erforderliche Richtung lenkt. Durch das Ventilsystem und die Vakuumpumpe kann ein geschlossener Kreislauf zum Austausch der Reagenzien und Gase im Kammer/Reagenzientank-System hergestellt werden. Die Vorrichtung gemäß EP 0077477 ist automatisiert und wird von einem Prozessor gesteuert; das Programm zur Behandlung und Infiltration der Proben wird bedienerlos abgearbeitet und es ist nicht nötig, Sicherheitsmaßnahmen bei der Verwendung schädlicher und giftiger Flüssigkeiten vorzunehmen.

Die Behandlungsdauer für eine Probe mit jeder der aufeinanderfolgenden Flüssigkeiten in den oben genannten Vorrichtungen hängt nur von der Diffusionsgeschwindigkeit der verdrängten Flüssigkeit von der Oberfläche der Probe ab. Zur Intensivierung dieses Prozesses werden Mischvorrichtungen verwendet, die allerdings keinen effektiven Flüssigkeitsaustausch in den Kassetten mit den Proben bewirken.

Die Vorrichtung zur Behandlung und Infiltration von histologischen Proben gemäß der DE 304 25 78 A1 beinhaltet eine Inkubationskammer, in der in aufrechtstehenden röhrenförmigen Zylindern flüssigkeitsdurchlässige Behälter mit histologischen Proben übereinander senkrecht angeordnet sind; in der Mitte der Kammer ist eine leistungsstarke vertikale Axialpumpe in Form einer Schnecke oder eines Kolbens angebracht, die bewirkt, daß die Behandlungs- und Infiltrationsflüssigkeiten in der Kammer zirkulieren, wobei sie von oben nach unten durch die röhrenförmigen Zylinder und die sich in diesen befindlichen Behälter mit den Proben fließen. Dadurch, daß die Proben in der Vorrichtung gemäß der DE 304 25 78 A1 gleichmäßig umströmt werden, kommt es zweifelsohne zu einer Intensivierung des Prozesses, allerdings ist durch die vorgeschlagene Anordnung der Behälter mit den Proben die Leistung der Vorrichtung gering. Außerdem ist die Axialpumpe nicht nur ein den mechanischen Aufwand erhöhendes Element, sie wird auch ständig durch die verschiedenen Behandlungsflüssigkeiten benetzt, was den Reinigungs- und Wartungsaufwand erhöht.

Die DE 42 00 446 A1 offenbart einen Bioreaktor, bei dem eine Zellträgeranordnung aus Membranen mit dazwischenliegenden spaltartigen Bereichen, in denen sich das zu behandelnde Biomaterial befindet, auf einer Drehachse in einem Gehäuse angeordnet ist. Das Behandlungsmedium wird durch die als Hohlwelle ausgebildete Drehachse direkt in die Zellträgeranordnung eingebracht und verteilt sich dort durch Kapillarwirkung oder indem es in Bereichen zwischen den Membranen, ausgehend von der Hohlwelle, nach unten fließt. Zwar sorgt die Drehbewegung für eine gleichmäßige Behandlung mit der Behandlungsflüssigkeit, indem diese gleichmäßig verteilt wird, jedoch findet diese Benetzung mit Behandlungsflüssigkeit nicht durch Eintauchen und Herausnehmen aus der Behandlungsflüssigkeit statt, vielmehr sorgen eine Pumpe und eine Leitung dafür, daß das Behandlungsmedium ständig aus dem Innenraum abgesaugt und über die Hohlwelle der Zellträgeranordnung zugeführt wird. Die Benetzung findet also im Umlaufverfahren statt und die Drehung sorgt dabei für die gleichmäßige Verteilung. Dies funktioniert deshalb, weil die Zellträgeranordnung derart beschaffen ist, daß sie eine Kapillarwirkung entfaltet. Abgesehen davon, daß bei einer Vorrichtung zur Behandlung und Infiltration von histologischen Proben der eingangs genannten Art keine Anordnung mit Kapillarwirkung vorhanden ist und sich eine solche mit dem flüssigen Wachs auch zusetzen würde, stellt eine Benetzung mit der Behandlungsflüssigkeit über eine Hohlwelle und einen Umwälzkreislauf mit Pumpe einen zu hohen apparativen Aufwand dar, zumal ohne die Kapillarwirkung ein Flüssigkeitsstrom der in der DE 42 00 446 A1 offenbarten Fließrichtung nur mit einer entsprechend starken Strömung erzielbar wäre.

Eine Vorrichtung zur Behandlung und Infiltration von histologischen Proben der eingangs genannten Art ist aus der US 4,576,796 A bekannt. Diese ermöglicht ebenfalls eine Behandlung im Flüssigkeitsstrom. Die Vorrichtung umfaßt eine im Gehäuse eingebaute senkrechte Drehachse, die sich in der Mitte des im Grundriß runden Gehäuses befindet, und einen auf der Achse senkrecht zu dieser angebrachten runden Rotor, auf dessen oberer Oberfläche sich einige Kanäle befinden, die vom Zentrum zur Peripherie um 2 bis 5° geneigt sind. In der Nähe des peripheren Endes jedes der Kanäle sind Vertiefungen vorgesehen, in denen sich gelochte Behälter für die Proben befinden. In der Mitte des Rotors ist eine Aushöhlung ausgebildet, von der die Kanäle abgehen. Die Kanäle haben ihre Fortsetzung von der Vertiefung für die Proben bis zum Rand des Rotors. Die Vorrichtung ist mit einem Mittel zum Drehen der Achse und des Rotors versehen, sowie mit einem Versorgungssystem mit einer Pumpe, mit Tanks für die Behandlungs- und Infiltrationsflüssigkeiten und mit Stutzen für die Zufuhr der Flüssigkeiten in das Gehäuse und für deren Entfernung aus dem Gehäuse. Der Stutzen für die Zufuhr der Flüssigkeit ist auf die zentrale Aushöhlung gerichtet.

Die dehydrierenden und aufhellenden Flüssigkeiten und das geschmolzene Paraffin werden aus den entsprechenden Tanks durch den Stutzen zur zentralen Aushöhlung geführt; die Drehung des Rotors bewirkt, daß sie in die einzelnen Kanäle fließen und die histologischen Proben umspülen, die sich in den Vertiefungen an der Peripherie des Rotors befinden. Die Behandlung im Flüssigkeitsstrom macht den Prozeß effektiver. Vor dem Wechseln der Behandlungsflüssigkeit kann der Motor zur Entfernung der vorherigen Flüssigkeit durch Zentrifugieren auf eine höhere Umdrehungsgeschwindigkeit geschaltet werden, was den Prozesses ebenfalls beschleunigt und effektiver macht. Durch den hohen retall verbrauch der Vorrichtung gemäß der US 4,576,796 A für jede zu behandelnde Probe und dadurch, daß die Vorrichtung mit nur wenigen Proben gleichzeitig bestückt werden kann, ist sie dennoch nicht wirtschaftlich.

Der Erfindung liegt die Aufgabe zugrunde, eine Vorrichtung zur Behandlung und Infiltration von histologischen Proben der eingangs genannten Art derart weiterzubilden, daß sie eine hohe Leistung und gleichzeitig hohe Effektivität bei der Behandlung und Infiltration aufweist.

Die Aufgabe wird erfindungsgemäß dadurch gelöst, daß die Drehachse im Gehäuse waagerecht angeordnet und die Vorrichtung derart ausgebildet ist, daß eine Behandlungsflüssigkeit bis zu einem derartigem Flüssigkeitsstand in die Kammer einführbar ist, daß die Behälter beim Drehen abwechselnd in die Behandlungsflüssigkeit getaucht und wieder herausgenommen werden, wodurch die Behandlung der Proben mit der Flüssigkeit erfolgt.

Weiterbildungen der Erfindung sind den Unteransprüchen entnehmbar.

Die Zeichnungen zeigen eine bevorzugte Ausführungsform der erfindungsgemäßen Vorrichtung:
Figur 1 stellt eine Frontansicht der erfindungsgemäßen Vorrichtung dar;
Figur 2 stellt eine Seitenansicht der erfindungsgemäßen Vorrichtung dar.

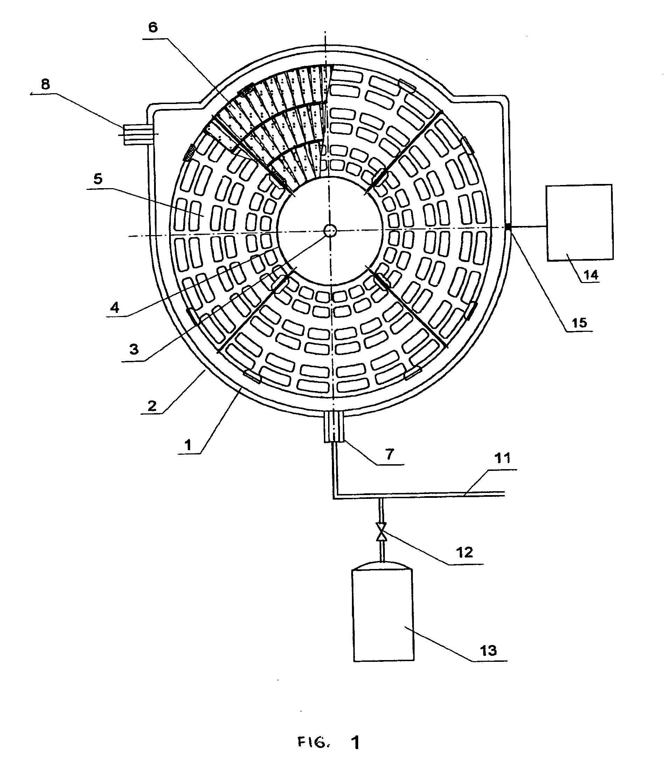

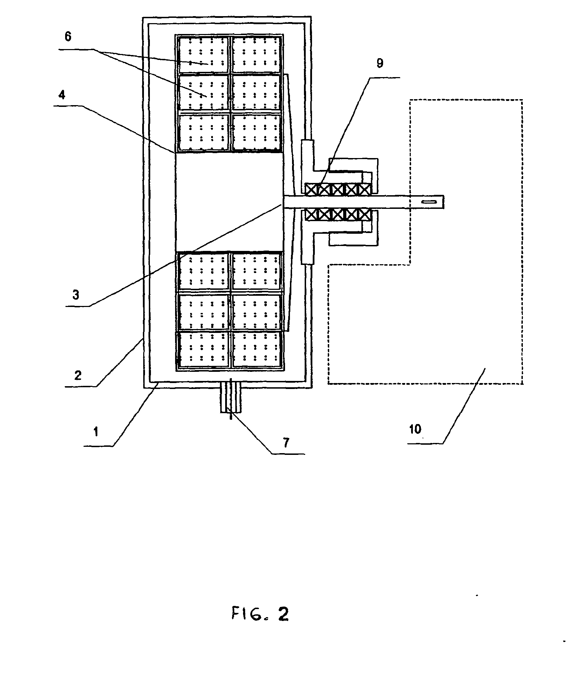

Gemäß der angemeldeten Erfindung umfaßt ein Apparat, wie in Figuren 1 und 2 dargestellt, ein Gehäuse 1 mit einem Wärmetauscher 2 zur Erwärmung oder Kühlung des Inhalts. Auf einer waagrechten Welle (Achse) 3 ist ein von Behältern 5 gebildeter Hohlring 4 angebracht. Es können zwei bis zwölf den Ring 4 bildende Behälter 5 verwendet werden, insbesondere werden, wie in Figur 1 dargestellt, vier Behälter verwendet. In den Behältern 5 werden Kassetten 6 mit histologischen Proben untergebracht. Der innere Zylinder des Hohlrings 4 hat einen Durchmesser, der mindestens das 2-fache und höchstens das 4-fache der Breite einer Kassette 6 beträgt. Alle Flächen der Behälter 5 sind gelocht.

Das Gehäuse 1 weist einen Stutzen 7 für die Zufuhr der Behandlungs- und Infiltrationsflüssigkeiten und ihre Entfernung sowie einen Stutzen 8, der mit dem Vakuumsystem (nicht dargestellt) verbunden ist, auf. Die Welle der Achse 3, die durch eine Dichtung 9 verläuft, ist mit einem Motor 10 verbunden, der mit veränderbarer Geschwindigkeit betrieben werden kann.

Der Stutzen 7 ist mit einem Kollektor 11 verbunden, in den durch prozessorgesteuerte Ventile 12 die Behandlungs- oder Infiltrationsflüssigkeiten aus den Tanks 13 gelangen. Die Vorrichtung weist so viele Tanks 13, die durch Ventile 12 mit dem Kollektor verbundenen sind, auf, wie Flüssigkeiten zur Behandlung und Infiltration der Proben nötig sind.

Die Vorrichtung umfaßt ein Mittel 14 zur Registrierung des Standes der Behandlungs- oder Infiltrationsflüssigkeit im Gehäuse 1. Der Sensor 15 des Mittels 14 befindet sich, wie in Figur 1 dargestellt, an der Innenwand des Gehäuses 1.

Das Gehäuse 1 und alle in ihm enthaltenen Bauteile sowie die Verbindungsteile sind aus Material, das gegen die Behandlungsflüssigkeiten beständig ist, z.B. rostfreiem Stahl, herstellt. Die Behälter 5 können aus gelochtem Blech oder aus Drahtgeflecht herstellt sein.

Die Vorrichtung funktioniert wie folgt.
Die Tanks 13 werden mit den Behandlungs- und Infiltrationsflüssigkeiten gefüllt. In die Behälter 5 werden die Kassetten 6 mit histologischen Proben gegeben. Durch den Stutzen 8 wird an das Gehäuse des Apparats ein geringes Vakuum um die 500 bis 600 mm Hg Säule (ungefähr 665 bis 798 mbar) angelegt. Das Vakuum bewirkt, daß die erste Behandlungsflüssigkeit durch die Ventile 12 in die Kammer gelangt (angesaugt wird). Der Behandlungsflüssigkeitsstand wird auf einer Höhe nicht unter dem Innenzylinder des Rings 4 und nicht über der Drehachse 3 eingestellt, so daß bei der Zugabe der Flüssigkeit der Sensor 15 anspricht; dann wird die Flüssigkeitszugabe beendet. Der Motor 10 beginnt, die Welle 3 und den Ring 4 mit einer Geschwindigkeit von 0,1 bis 10 U/min zu drehen. Bei der Drehung werden die Behälter abwechselnd in die Behandlungsflüssigkeit getaucht und wieder herausgenommen. Beim Herausnehmen fließt die Behandlungsflüssigkeit vom Behälter und den darin befindlichen Kassetten mit den Proben nach unten ab. Nach Beendigung der Behandlung wird die Flüssigkeit aus dem Gehäuse entfernt und in den entsprechenden Tank 13 gegeben. Die Umdrehungsgeschwindigkeit des Rings 4 wird auf 5 bis 10 U/sek erhöht; so wird tropfenförmige Flüssigkeit vom Behälter und den Kassetten mit den Proben entfernt. Die Behandlung und das Zentrifugieren können mit einem Restdruck im Gehäuse von 200 bis 600 mm Hg Säule (ungefähr 266 bis 798 mbar) durchgeführt werden.

Nach dem Zentrifugieren wird der Motor gestoppt und dem Gehäuse wird die nächste Flüssigkeit zugeführt. Die Behandlungsvorgänge werden mit jeder Flüssigkeit wiederholt.

Vor der Zugabe des geschmolzenen Infiltrationswachses wird die Temperatur im Gehäuse durch den Wärmetauscher 2 auf die Schmelztemperatur des Wachses erhöht, damit das Wachs im Gehäuse im geschmolzenen Zustand bleibt.

Die Vorrichtung kann mit bis zu 360 Kassetten gleichzeitig bestückt werden.

Die Vorrichtung funktioniert automatisch durch Prozessorsteuerung nach vorgegebenem Programm.

Die erfindungsgemäße Vorrichtung ermöglicht es, histologische Proben für die mikroskopische Untersuchung von der Fixation bis zur Infiltration mit Wachs vorzubereiten. Durch das periodische Eintauchen in die Behandlungsflüssigkeiten und das Entfernen der vorherigen Flüssigkeit von der Oberfläche der Proben durch Zentrifugieren wird der Behandlungsprozeß intensiviert, so wird die Behandlung effektiver. Dadurch, daß es möglich ist, die Vorrichtung mit einer großen Anzahl von Proben zu bestücken und die Bearbeitung sehr effektiv ist, wird eine erhöhte Produktivität erzielt.

## Patentansprüche

1. Vorrichtung zur Behandlung und Infiltration von histologischen Proben, bestehend aus einem in einem kammerförmigen Gehäuse (1) eingebauten Drehmittel, das eine Drehachse (3) mit darauf angebrachten Behältern (5) für Kassetten (6) zum Halten von histologischen Proben aufweist, einem Mittel zum Drehen der Drehachse (3) mit veränderlicher Geschwindigkeit, Behandlungs- und Infiltrationsflüssigkeitstanks (13), die außerhalb des Gehäuses (1) angeordnet sind, sowie Stutzen (7, 8) für die Zufuhr dieser Flüssigkeiten zum Gehäuse (1) und für deren Entfernung aus dem Gehäuse (1),
**dadurch gekennzeichnet,**
**daß** die Drehachse (3) im Gehäuse (1) waagerecht angeordnet und die Vorrichtung derart ausgebildet ist, daß eine Behandlungsflüssigkeit bis zu einem Flüssigkeitsstand in die Kammer einfüllbar ist, bei dem die Behälter (5) beim Drehen abwechselnd in die Behandlungsflüssigkeit getaucht und wieder herausgenommen werden, wodurch die Behandlung der Proben mit der Flüssigkeit erfolgt.

2. Vorrichtung nach Anspruch 1,
**dadurch gekennzeichnet,**
**daß** die Behälter (5) für die Kassetten (6) mit histologischen Proben in Form von Ringsektoren ausgeführt sind.

3. Vorrichtung nach Anspruch 2,
**dadurch gekennzeichnet,**
**daß** die Behälter (5) ringförmig angeordnet sind.

4. Vorrichtung nach Anspruch 3,
**dadurch gekennzeichnet,**
**daß** der Innendurchmesser des Behälterrings (4) das 2 bis 4-fache der Breite einer Kassette (6) für histologische Proben beträgt.

5. Vorrichtung nach Anspruch 3 oder 4,
**dadurch gekennzeichnet,**
**daß** der Behälterring (4) auf der Drehachse (3) in einer Ebene senkrecht zur Drehachse (3) angeordnet ist.

6. Vorrichtung nach Anspruch 1 bis 5,
**dadurch gekennzeichnet,**
**daß** die Behälter (5) für die Kassetten (6) mit histologischen Proben gelocht sind.

7. Vorrichtung nach Anspruch 1 bis 6 ,
**dadurch gekennzeichnet,**
**daß** sie mit einem Flüssigkeitsstandsensor (15) ausgerüstet ist, der an einer Gehäusewand nicht höher als die Drehachse (3) und nicht niedriger als der untere Punkt des Innenzylinders des Behälterrings (4) angebracht ist.

## Claims

1. A device for treatment and infiltration of histological samples comprising rotating means installed in a chamber-type casing (1) and having a rotation axis (3) on which containers (5) for cassettes (6) for holding histological samples are mounted, and further comprising means for rotating said rotation axis (3) at various speeds, tanks (13) disposed outside said housing (1) for accommodation of said treatment and infiltration liquids, and also ports (7, 8) for feeding said liquids to the casing (1) and removing the same from said casing (1),
**characterized in that**
the rotation axis (3) is disposed horizontally in said casing (1) and the device is designed such that a treatment liquid can be filled into the chamber to a level at which the containers (5) are alternatingly immersed in the treatment liquid and withdrawn therefrom, by which means treatment of the samples with said liquid is carried out.

2. The device according to claim 1,
**characterized in that**
the containers (5) for the cassettes (6) containing histological samples are in the form of annular sectors.

3. The device according to claim 2,
**characterized in that**
said containers (5) are arranged in a circle.

4. The device according to claim 3,
**characterized in that**
the inside diameter of the container ring (4) is from 2 to 4 times the width of a cassette (6) for histological samples.

5. The device according to claim 3 or 4,
**characterized in that**
the container ring (4) is disposed on the rotation axis (3) in a plane normal to the rotation axis (3).

6. The device according to claims 1 to 5,
**characterized in that**
the containers (5) for the cassettes (6) containing histological samples are perforated.

7. The device according to claims 1 to 6,
**characterized in that**
it is equipped with a liquid level sensor (15) mounted on a casing wall at a level not higher than the rotation axis (3) and not lower than the lowest point of the internal cylinder of the container ring (4).

## Revendications

1. Dispositif pour le traitement et l'infiltration d'échantillons histologiques, se composant d'un moyen rotatif monté dans un coffret (1) en forme de cavité, qui présente un axe de rotation (3) avec des récipients (5) placés dessus pour des cassettes (6) pour le maintien d'échantillons histologiques, un moyen pour la rotation de l'axe de rotation (3) avec une vitesse variable, un réservoir de liquide d'infiltration et de traitement (13) qui sont disposés à l'extérieur du coffret (1), ainsi que des tubulures (7, 8) pour l'apport de ces liquides au coffret (1) et pour le retrait hors du coffret (1),
**caractérisé en ce que**
l'axe de rotation (3) est disposé horizontalement dans le coffret (1) et le dispositif est réalisé de sorte qu'un liquide de traitement peut être introduit jusqu'à un niveau de liquide dans la cavité, les récipients (5) étant plongés et retirés en alternance dans le liquide de traitement, le traitement des échantillons s'effectuant avec le liquide.

2. Dispositif selon la revendication 1, **caractérisé en ce que** les récipients (5) pour les cassettes (6) avec les échantillons histologiques sont réalisés sous forme de secteurs annulaires.

3. Dispositif selon la revendication 2,
**caractérisé en ce que** les récipients (5) sont disposés en forme d'anneau.

4. Dispositif selon la revendication 3,
**caractérisé en ce que**
le diamètre interne de l'anneau de récipient (4) est de 2 à 4 fois plus large qu'une cassette (6) pour des échantillons histologiques.

5. Dispositif selon la revendication 3 ou 4,
**caractérisé en ce que**
l'anneau de récipient (4) est disposé sur l'axe de rotation (3) dans un plan perpendiculaire à l'axe de rotation (3).

6. Dispositif selon les revendications 1 à 5,
**caractérisé en ce que**
les récipients (5) pour les cassettes (6) avec des échantillons histologiques sont percés.

7. Dispositif selon les revendications 1 à 6,
**caractérisé en ce qu'**il est équipé d'un capteur de niveau de liquide (15) qui est aménagé sur une paroi de coffret pas plus haut que l'axe de rotation (3) et pas plus bas que le point inférieur du cylindre interne de l'anneau de récipient (4).
